# EUROPEAN PATENT APPLICATION

(11) **EP 2 192 745 A1**
(43) Date of publication of application: **02.06.2010**
(21) Application number: 08800920.4
(22) Date of filing: 19.09.2008
(51) Int. Cl.: H04L 29/06

(54) **VIDEO DATA UPDATE METHOD AND SYSTEM**

(30) Priority: 20.09.2007 CN 200710153049
(71) Applicant: Huawei Technologies Co., Ltd., Longgang District, Shenzhen Guangdong 518129 (CN)
(72) Inventor: LI, Dong, Shenzhen Guangdong 518129 (CN); XU, Zhiyong, Shenzhen Guangdong 518129 (CN)
(74) Representative: Barth, Stephan Manuel
(86) International application number: PCT/CN2008/072426
(87) International publication number: WO 2009/039781

(57) **Abstract**

A method, apparatus, and system for updating video data are disclosed herein. The first method disclosed herein includes: the MP receives an indication from the MC, detects the video quality of the video source, and requests the video data to be updated from the MC according to the detection result. The second method includes: the MP receives an indication sent by the MC and performs detection; and requests video data to be updated from the MC after detecting an in-band video data update request sent by a video source. The third method includes: the MP sends an in-band video data update request to the video source specified by the indication according to the indication sent by the MC, requesting to update the video data specified by the indication. Through the present invention, the MP requests the video data that needs to be updated from the MC.

## Description

### Field of the Invention

The present invention relates to communication technologies, and in particular, to a technology for updating video data.

### Background of the Invention

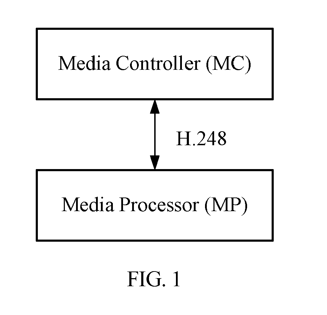

A media server can be functionally divided into two function entities: a Media Controller (MC) and a Media Processor (MP), as shown in FIG. 1. The physical device corresponding to the MC may be a Media Gateway Controller (MGC), which is responsible for conference control, MP resource management, and access control. The physical device corresponding to the MP may be a Media Gateway (MG), which is responsible for the aggregation and distribution of conference audio, video and data media, and the functions related to media processing such as audio mixing, video screen switching, coding, decoding, and rate adaptation. The interface protocol between the MC and the MP is H.248.

H.248 is a media gateway control protocol, and is a protocol for controlling physically separated media servers, and can separate call control from media conversion. Through H.248, the MGC controls and manages the MG and the H.248 termination. Through H.248, the MG converts different transmission protocols into the Real-time Transport Protocol (RTP)/Real-time Transport Control Protocol (RTCP) suitable for transmission of streams on the IP network. In this way, service interworking is implemented between a Packet Switched (PS) network and a Public Switched Telephony Network (PSTN).

H.248 involves two basic components: termination and context. Various resources on the MP are abstracted as terminations, and a combination of terminations is abstracted as a context. A context may include multiple terminations, and the relations between terminations are described by a topology.

In this protocol-based abstract model, the essence of call routing is operations on the terminations and the context. Such operations are performed through command requests and responses between the MC and the MP. The parameters carried in a command, also known as descriptors, are categorized into property, signal, event, and statistic. The parameters with service relevance are logically aggregated into a package.

Currently, video coding and compression standards include two series: MPEG-x and H.26x. The basic coding unit is a Macro Block (MB). In the H.261 standard, each MB is composed of four 8*8 luminance blocks and two 8*8 chroma blocks. One Group of Block (GOB) is composed of 3*11 MBs. One Quarter Common Intermediate Format (QCIF) image is composed of three GOBs, and one Common Intermediate Format (CIF) image includes 12 GOBs. Such compression algorithms improve the coding efficiency in three aspects:
Motion Estimation (ME)/Motion Compensation (MC) eliminates video time redundancy.

The Discrete Cosine Transform (DCT) of image difference eliminates space redundancy.

The Variable Length Code (VLC) of the quantization coefficient eliminates statistic redundancy.

Practice proves that such methods enable the video coding standard to achieve a very high compression efficiency. However, the compressed bit streams involve tricky problems in the transmission process. On the one hand, the compressed bit streams are very sensitive to the bit errors of the channel; on the other hand, the attenuation of the channel leads to plenty of random bit errors and burst bit errors, which affects normal transmission of the bit streams. Especially, after the VLC solution is adopted, the bit streams are more vulnerable to bit errors. As a result, the decoder is out of synchronization with the coder. The VLC code words are not decoded correctly before the next sync code word arrives. Meanwhile, the predictive coding technology spreads errors into the entire video sequence, which reduces the quality of the reconstructed image drastically. Therefore, error tolerance measures need to be taken according to the transmission features of the actual application channel to ensure the transmission quality of videos.

The error tolerance algorithms are categorized into coder-based error tolerance algorithm, decoder-based error tolerance algorithm, and feedback channel-based error tolerance algorithm, depending on the location in the video transmission system. The feedback channel-based error tolerance algorithm uses the decoder to obtain error information and transmits the error information to the coder through the feedback channel to process the errors. Simple feedback information is: 1-frame update request, local MB data update request, and so on.

The feedback channel of video information is attached to the bearer plane (in-band channel) or detached from the bearer channel (out-band channel). Both the in-band channel and the out-band channel can transmit the feedback information from the video decoder to the video coder, thus implementing the error tolerance algorithm based on the feedback channel.

Depending on the transmission channel, the existing transmission protocols are categorized into out-band transmission protocols (detached from the bearer plane) and in-band transmission protocols (attached to the bearer plane) and include the following types:

### (1) Mode based on extended SIP

An extensible Markup Language (XML) tag of the application/media_control+xml type is added to a Session Initiation Protocol (SIP) message body to transmit the video data update request through out-band signaling.

This mode supports only the 1-frame (intra-frame) update request, and requires the terminal to support extended SIP. Due to extended SIP, the out-band transmission mode is generally applied.

### (2) Mode based on extended RTCP messages

The mode based on extended RTCP message uses the extended RTCP messages to provide video feedback information. The provided video feedback information includes:
Picture Loss Indication (PLI);
Slice Loss Indication (SLI); and
Reference Picture Selection Indication (RPSI).

According to different feedback information, the extended RTCP messages carry different parameters. Due to the extended RTCP mode, the in-band transmission mode is generally applied.

### (3) H.245 signaling

The International Telecommunication Union - Telecommunication Standardization Sector (ITU-T) H.245 protocol provides a request command for updating the signaling-plane video data, and its basic function is to request the coder to send an I frame or an updated GOB or MB when the decoder detects errors. The H.245 protocol requires the terminal to support the H.245 signaling. The video update commands provided by the H.245 protocol include:
videoFastUpdatePicture, requesting to update the entire frame quickly;
videoFastUpdateGOB, requesting to update the GOB; and
videoFastUpdateMB, requesting to update the MB.

This protocol is generally applied to H.323 terminals, and employs the out-band transmission mode.

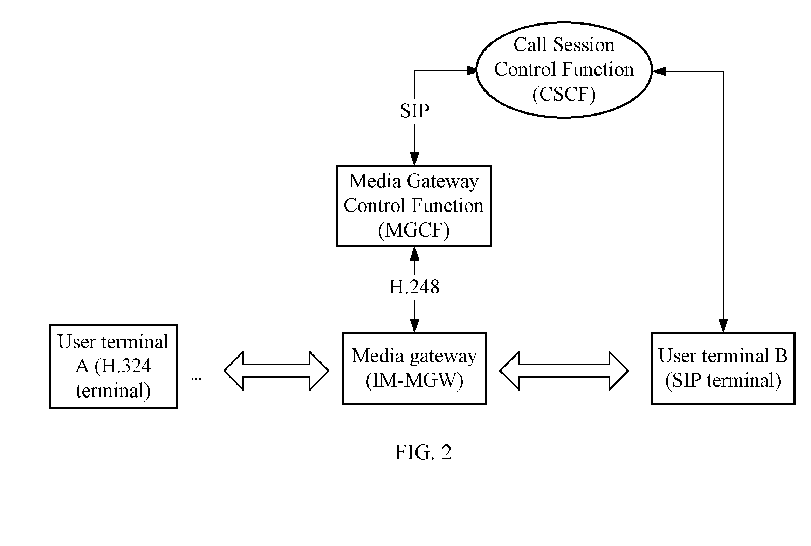

All the foregoing protocols can transmit video quality feedback information. Due to diversity of terminals, different terminals may employ different transmission channels and protocols to implement the error tolerance algorithm based on the feedback channel. As shown in FIG. 2, a multimedia session is performed between an H.324 terminal located at the softswitch network and a SIP terminal located at the IMS network (it is possible that multi-party terminals exist, and FIG. 2 shows only two parties). In the multimedia communication between the H.324 terminal and the IMS terminal, the IP Multimedia-MGW (IM-MGW)/Media Gateway Control Function (MGCF) undertakes the task of interworking bearer control and call control, and the MGCF undertakes the termination task of the H.245 protocol according to the 3GPP protocol. The H.324 terminal generally supports the request for updating video data quickly in the H.245 protocol, but does not support the RTCP in-band request; and the SIP terminal in the IMS network supports the in-band update request and the out-band SIP signaling update request.

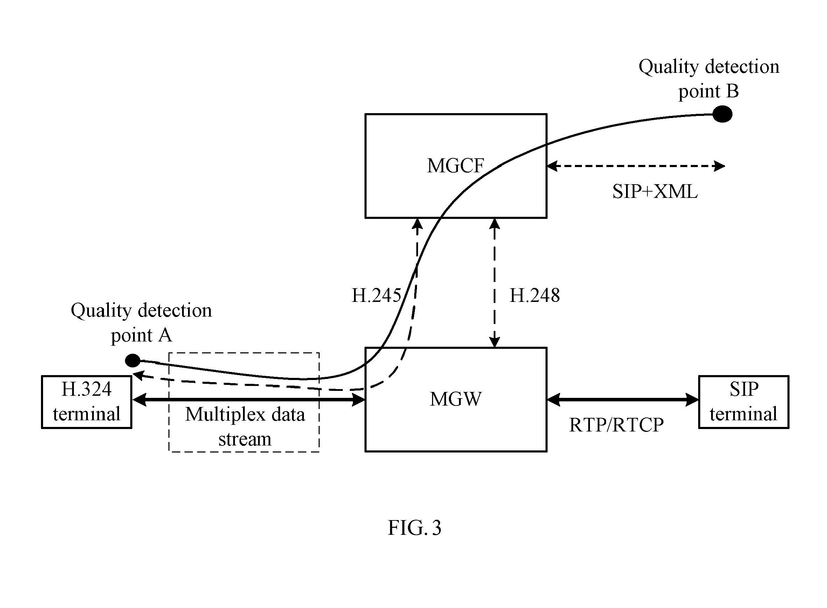

FIG. 3 shows processing of a video data update request in the prior art. In FIG. 3, two black dots indicate the video quality detection points A and B, and trigger quality reporting or a video 1-frame (namely, intra-frame) update request. When the IMS terminal supports the SIP+XML extended out-band video data update request, as shown in FIG. 3, the MGW can receive the in-band request initiated by the H.324 terminal of the softswitch network, and send the request to the MGCF through H.245. The MGCF can send a video data update request to the SIP terminal in the IMS network through SIP+XML, thus implementing the update of the video data. The MGCF can receive out-band requests sent by the SIP terminal through SIP+XML, and send in-band video data update requests to the H.324 terminal through H.245, thus implementing the update of video data.

The prior art has at least the following defects:

When the IM-MGW detects the video quality problems of the H.324 terminal or SIP terminal, the IM-MGW is unable to request the video data to be updated from the MGCF.

When the SIP terminal feeds back a video data update request through the in-band RTP/RTCP but the IM-MGW is unable to provide the requested update data, the IM-MGW is unable to submit the update request to the MGCF through the H.248 protocol, and the MGCF is unable to request the H.324 terminal to update the video data through an H.245 message.

After the MGCF receives an H.245 video data update request from the H.324 terminal but the SIP terminal does not support the SIP+XML video data update request, the MGCF is unable to instruct the IM-MGW to send the in-band video data update request.

In conclusion, the prior art provides no solution through which the MGCF can instruct the MGW to update the video data in the foregoing scenarios.

### Summary of the Invention

The embodiments of the present invention provide a method, apparatus, and system for updating video data so that an MC can instruct an MP to update video data as required.

A method for updating video data includes:
by an MP, receiving an indication sent by an MC, where the indication instructs the MP to detect video quality of a video source; and
detecting the video quality of the video source and requesting the video data to be updated from the MC according to a detection result.

An apparatus provided in an embodiment of the present invention is an MC. The MC includes:
an indication sending module, adapted to send an indication to an MP; and
an update request receiving module, adapted to receive a request for obtaining video data to be updated, where the request is sent by the MP according to a detection result after the MP detects video quality of a video source according to the indication sent by the indication sending module.

An apparatus provided in an embodiment of the present invention is an MP. The MP includes:
an indication receiving module, adapted to receive an indication sent by an MC;
a detecting module, adapted to detect video quality of a video source according to the indication; and
an update requesting module, adapted to request the video data to be updated from the MC according to a video quality detection result of the detecting module.

A system for updating video data in an embodiment of the present invention includes an MC and an MP.

The MP is adapted to detect the video quality of a video source according to an indication from the MC, and send a request for obtaining the video data to be updated to the MC according to a video quality detection result.

The MC is adapted to instruct the MP to detect the video quality of the video source.

Through the foregoing embodiment of the present invention, the MC sends an indication of detecting the video quality of the video source to the MP; the MP detects the video quality, and, if any video quality problem is detected, reports the problem to the MC to update the video data, thus overcoming the corresponding defect in the prior art. Therefore, the MP detects the quality of the video data according to the indication from the MC and sends a request for updating the video data.

Another method for updating video data in an embodiment of the present invention includes:
by an MP, receiving an indication sent by an MC and performing detection; and requesting video data to be updated from the MC after detecting an in-band video data update request sent by a video source, where:
   the indication received by the MP from the MC instructs the MP to detect the in-band video data update request sent by the video source.

Another apparatus provided in an embodiment of the present invention is an MC. The MC includes:
an indication sending module, adapted to send an indication to an MP; and
an update request receiving module, adapted to receive a request for obtaining video data to be updated, where the request is sent by the MP after the MP detects an in-band video update request from a specified video source according to the indication sent by the indication sending module.

Another apparatus provided in an embodiment of the present invention is an MP. The MP includes:
an indication receiving module, adapted to receive an indication sent by an MC;
a detecting module, adapted to detect an in-band video data update request sent by a video source specified by the indication according to the indication; and
an update requesting module, adapted to request the video data to be updated from the MC after the detecting module detects the in-band video data update request.

A system for updating video data in an embodiment of the present invention includes an MC and an MP.

The MP is adapted to detect an in-band video data update request of a video source according to an indication from the MC, and send a request for obtaining the video data to be updated to the MC after detecting the in-band video data update request.

The MC is adapted to instruct the MP to detect the in-band video update request sent by the video source.

Through the foregoing embodiment of the present invention, the MC sends an indication to the MP, and the indication instructs the MP to detect the in-band video data update request from the video source; after detecting the in-band video data update request from the video source, the MP sends a video data update request to the MC, thus overcoming the corresponding defect in the prior art. Therefore, the MP detects the in-band video data update request according to the indication from the MC, and reports it to the MC to request the update of the video data.

Another method for updating video data in an embodiment of the present invention includes:
by an MP, sending an in-band video data update request to a video source specified by an indication according to the indication sent by an MC, where: the in-band video data update request is a request for updating the video data specified by the indication, and the indication is sent by the MC to the MP and instructs the MP to send the in-band video data update request for updating the specified video data to the video source.

Another apparatus provided in an embodiment of the present invention is an MC. The MC includes:
an update request receiving module, adapted to receive an out-band video data update request sent by a video source; and
an indication sending module, adapted to send an indication to an MP, where: the indication instructs the MP to send an in-band video data update request for obtaining the video data to be updated, and the video data requested by the in-band video data update request for updating is the video data indicated by the out-band video data update request for updating.

Another apparatus provided in an embodiment of the present invention is an MP. The MP includes:
an indication receiving module, adapted to receive an indication sent by an MC; and
an update requesting module, adapted to send an in-band video data update request to a video source according to the indication, requesting to update the video data specified by the indication.

A system for updating video data in an embodiment of the present invention includes an MC and an MP.

The MP is adapted to send an in-band video data update request to a requested video source according to an indication from the MC, requesting to update the video data.

The MC is adapted to send the indication to the MP after receiving an out-band video data update request from the video source, instructing the MP to send the in-band video data update request to the requested video source in the out-band video update data update request.

Through the foregoing embodiment of the present invention, the MC sends an indication to the MP, and the indication instructs the MP to send an in-band video data update request; after receiving the indication, the MP sends an in-band video data update request according to the indication, thus overcoming the corresponding defect in the prior art. Therefore, the MP sends an in-band video data update request to update the video data according to the indication from the MC.

### Brief Description of the Drawings

To make the technical solution of the present invention or the prior art clearer, the following outlines the accompanying drawings for illustrating the embodiments of the present invention or the prior art. Evidently, the accompanying drawings are exemplary only, and those skilled in the art can derive other drawings from such accompanying drawings without creative work.
FIG. 1 shows an MP in the prior art;
FIG. 2 shows an architecture of interworking between a softswich terminal and a SIP terminal in the prior art;
FIG. 3 shows a scenario of interworking between a softswich terminal and a SIP terminal in the prior art;
FIG. 4A and FIG. 4B show a scenario of interworking between a softswich terminal and a SIP terminal in the first embodiment of the present invention;
FIG. 5A is a flowchart for an MGW to detect video quality in the first embodiment of the present invention;
FIG. 5B is a signaling flowchart for an MGW to detect video quality in the first embodiment of the present invention;
FIG. 6 shows a scenario of interworking between a softswich terminal and a SIP terminal in the second embodiment of the present invention;
FIG. 7A is a flowchart for an MGW to detect in-band request messages in the second embodiment of the present invention;
FIG. 7B is a signaling flowchart for an MGW to detect in-band request messages in the second embodiment of the present invention;
FIG. 8 shows a scenario of interworking between a softswich terminal and a SIP terminal in the third embodiment of the present invention;
FIG. 9A is a flowchart for an MGCF to instruct an MGW to detect video update requests in the third embodiment of the present invention;
FIG. 9B is a signaling flowchart for an MGCF to instruct an MGW to detect video update requests in the third embodiment of the present invention;
FIG. 10 shows a structure of an MC in an embodiment of the present invention; and
FIG. 11 shows a structure of an MP in an embodiment of the present invention.

### Detailed Description of the Embodiments

The embodiments of the present invention are detailed below with reference to accompanying drawings.

The embodiments of the present invention put forward a technical solution to notifying the video source to send update data through message exchange between the MC and the MP in an architecture that separates the bearer from control, with a view to improving the video communication quality. Through the message exchange, video quality is detected and reported, or in-band video data update requests are detected and reported, or the MC instructs the MP to send a video data update request.

### First Embodiment

This embodiment describes a process for an MGCF to instruct an MGW to detect and report video quality. In this process, the MGW participates in video coding and decoding, and can dynamically detect the quality of the video streams sent from the video source, and report the quality information to the MGCF. Therefore, the MGW is responsible for tracking the quality of the video source and sending the update request in the session process.

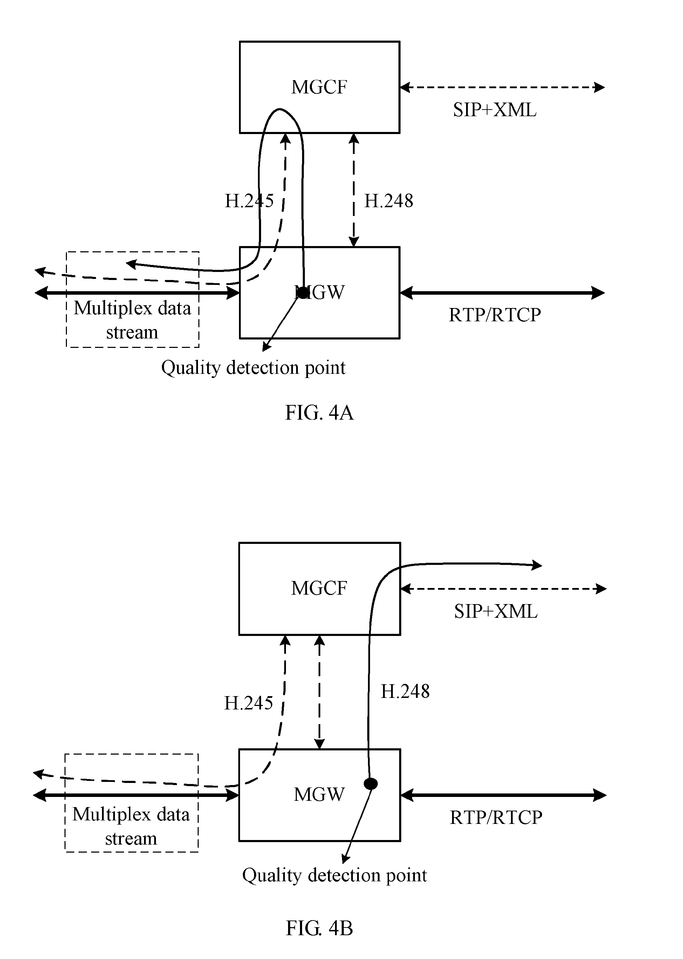

FIG. 4A and FIG. 4B show application scenarios of this embodiment.

In FIG. 4A, the MGW participates in the video coding and decoding, and therefore, the video quality detection point may be set in the MGW. When the MGW detects a quality problem of the video from the video source, namely, the H.324 terminal, the MGW feeds back the video quality to the MGCF. The MGCF requests the H.324 terminal to send video update data through H.245.

In FIG. 4B, the MGW participates in the video coding and decoding, and therefore, the video quality detection point may be set in the MGW. When the MGW detects a quality problem of the video from the video source, namely, the SIP terminal, the MGW feeds back the video quality to the MGCF. The MGCF requests the SIP terminal to send video update data through SIP+XML.

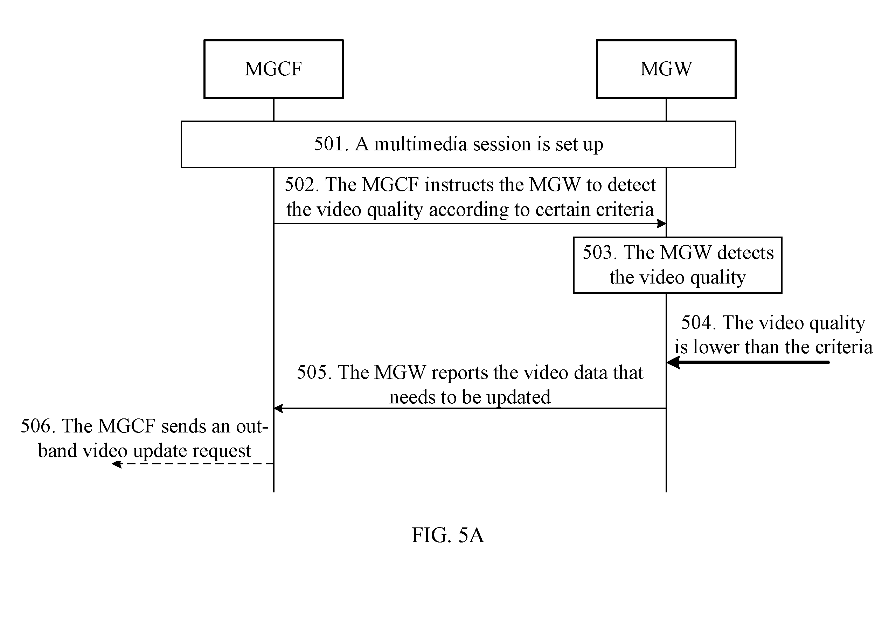

FIG. 5A is a flowchart for an MGW to detect video quality in the first embodiment of the present invention. In this flowchart, the MGW detects and reports the video quality to the MGCF in the scenario given in FIG. 4A and FIG. 4B. The process includes the following steps:
Step 501: A multimedia session is set up. In the process of setting up the multimedia session, the MGCF checks whether the MGW has participated in video coding and decoding between different video sources, for example, conference screen splitting or transcoding.
Step 502: After determining that the MGW has participated in video coding and decoding, the MGCF instructs the MGW to start detecting the video quality, determines the detection criteria, for example, the required quality level of the video to be detected, and delivers the determined detection criteria to the MGW
Step 503: In the decoding process, the MGW calculates or measures the received video data as required according to the required quality level specified by the MGCF.
Steps 504-505: When the MGW finds that the video quality is lower than the quality level specified by the MGCF through calculation, and is unable to recover the video quality level through decoding, the MGW reports the video data information that needs to be updated to the MGCF.
Step 506: According to the video data information reported by the MGW, the MGCF sends an out-band video data update request. If detecting a video quality problem at the H.324 terminal, the MGCF sends an out-band video data update request to the H.324 terminal through H.245; if detecting a video quality problem at the SIP terminal, the MGCF sends an out-band video data update request to the SIP terminal through SIP+XML.

In the process shown in FIG. 5A, the MGCF sets the video quality level and decides the detection criteria, including but not limited to an MB error rate and other detection criteria of the video quality.

Evidently, when the video source leads to video quality deterioration due to network transmission or other factors, the MGW and the MGCF decide whether to request new video data according to the extent of quality deterioration, thus ensuring the update of the video data between the video source and the MGW

This embodiment implements the foregoing process by extending the H.248 protocol. For example, in this embodiment, a video quality detection event is added to the H.248 protocol. By delivering this event to the MGW, the MGCF instructs the MGW to detect and report the video quality event according to the specified criteria. The H.248 protocol message reported by the MGW to the MGCF carries the video data update parameters indicative of the video data information that needs to be updated.

The video quality detection event delivered by the MGCF to the MGW carries the video quality detection parameters, which indicate the criteria for the MGW to detect and report the video quality. The video quality detection parameters include at least one of the following parameters:
1. Min Percent of Error (minpoe): The minpoe may be used as a basis for judging whether to update the video data. When the MGW detects that the video MB error rate is less than the minpoe, the current video quality is acceptable; otherwise, the current video quality is locally deteriorated, and a local update request needs to be sent. The allowed range of the minpoe may be set to 20-50.
2. Max Percent of Error (maxpoe): The maxpoe may be used as a basis for judging whether to update the video data. When the MGW detects that the video MB error rate is greater than the maxpoe, the current video quality is deteriorated seriously, and an intra-frame update request (namely, an 1-frame update request) needs to be sent. The allowed range of the maxpoe may be: minpoe < maxpoe < 100.
3. Minimum notify interval (nint): The nint specifies the minimum time interval of reporting by the MGW. The nint is set to prevent the MGW from reporting the video quality detection event too frequently when the video quality stays at a low level due to poor network quality.

The foregoing parameters decide the criteria and the reporting frequency for the MGW to detect and report the video quality. For example, the video quality detection event parameters are: minpoe=30, maxpoe=60, and nint=5s. The MGW measures the number of the actually received MBs and the number of erroneous MBs. If the MB error rate reaches 30%, the MGW reports the video quality detection event and requests to update the local data; if the MB error rate reaches 60%, the MGW reports the video quality detection event, and requests to update the entire frame; if the MB error rate of the video data keeps being higher than a set threshold (minpoe or maxpoe) in a period for certain reasons, the MGW needs to wait for 5s before reporting the next video quality detection event upon completion of one attempt of event reporting.

The message reported by the MGW to the MGCF based on the video quality detection event carries the video data update parameters, which indicate the video data that needs to be updated. The video data update parameters may include at least one of the following parameters:
firstGOB: indicates the first GOB identifier to be updated in the video image, where the GOB identifier depends on the specific coding algorithm;
numberOfGOBs: indicates the number of GOBs that need to be updated;
firstMB: indicates the first MB identifier to be updated, where the MB identifier depends on the specific coding algorithm;
numberOfMBs: indicates the number of MBs that need to be updated; and
fastUpdatePicture: indicates that the entire video image needs to be updated, namely, the video source needs to send 1-frame data.

The foregoing video data update parameters reported by the MGW may be used to implement the request for updating the local GOB, local MB, and/or the entire 1-frame data. For example, the reported video data update parameters are firstGOB=3 and numberOfGOBs=5, indicating that it is necessary to update the video data of five GOBs numbered 3-7; the reported video data update parameter is fastUpdatePicture=1, indicating that it is necessary to update the entire video image frame and that the video source needs to send new I-frame data.

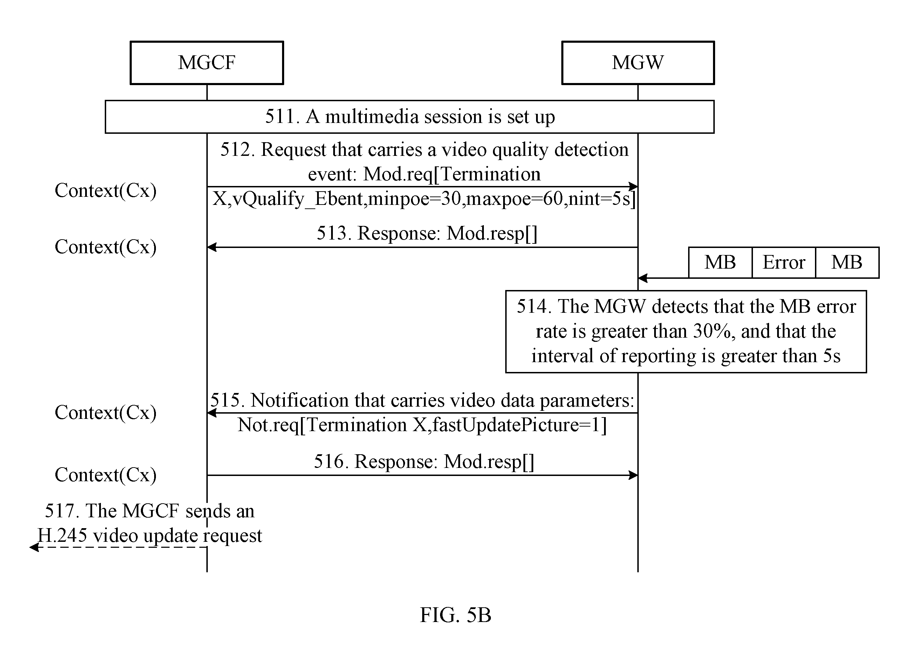

In the network architecture shown in FIG. 2, the MGW detects the video quality of both parties to the session and reports the video quality, where the detection process for one party is the same as the detection process for the other party. FIG. 5B shows a signaling flowchart for the MGW to detect the video quality of the H.324 terminal and report the video data to be updated.

As shown in FIG. 5B, the process for an MGW to detect video quality in the first embodiment of the present invention includes the following steps:
Step 511: A multimedia session is set up.
Step 512: The MGCF sends a request to a specified termination (MGW) in the session through the H.248 protocol. The request indicates the video quality detection event and the corresponding event parameters.

In this embodiment, the MGCF delivers the request to termination X corresponding to the H.324 terminal. The parameters of the video quality detection event include: minpoe=30, maxpoe=60, and nint=5s.

Step 513: The MGW returns a response after receiving the request.

Steps 514-515: The MGW measures the number of received MBs and the number of erroneous MBs according to the video quality detection event and the parameters indicated by the MGCF, and detects the video stream data. If detecting that the video MB error rate is greater than 60% and the notification interval is greater than 5s, the MGW sends a notification to the MGCF. Through the notification, the MGW reports the video quality detection event to the MGCF. The notification carries the video data update parameters (fastUpdatePicture=1), and indicates the video data that needs to be updated.

After the MGW detects that the MB error rate is higher than the minpoe (for example, minpoe=30% in this embodiment) but lower than the maxpoe (for example, maxpoe=60% in this embodiment), the MGW notifies the MGCF to update the local data. The notification may carry the address of the first lost MB, the number of lost MBs, and the time location (see the SLI command in the Audio-Visual Profile with Feedback (AVPF)). If the detected error rate is higher than the maxpoe (for example, maxpoe=60% in this embodiment), the MGW notifies the MGCF to update the entire frame through the parameter "fastUpdatePicture= 1".

Step 516: The MGCF returns a response after receiving the notification.

Step 517: According to the video data update parameter (fastUpdatePicture=1) reported by the MGW, the MGCF sends an H.245 signaling message (such as videoFastUpdatePicture) to the H.324 terminal, requesting the H.324 terminal to update the entire frame.

In the process shown in FIG. 5B, the MGCF delivers the detection request to termination X corresponding to the H.324 terminal. Besides, the MGCF may detect the termination corresponding to the SIP terminal. In this case, when the termination corresponding to the SIP terminal detects any video quality problem, the termination also needs to report the problem to the MGCF; the MGCF sends a video data update request to the SIP terminal through SIP+XML according to the reported parameters, requesting the SIP terminal to update the video data.

### Second Embodiment

In this embodiment, the MGCF instructs the MGW to detect in-band video data update signaling, and report the video data update request, and therefore, the MGW can detect the video data update request and report it to the MGCF, and the MGCF transmits the video data update request to the requested video source, thus implementing the update of the video data in the session.

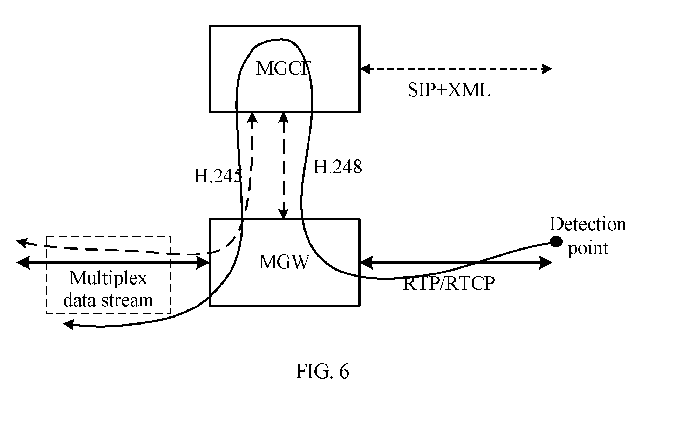

FIG. 6 shows an application scenario of this embodiment.

In FIG. 6, the MGW detects the in-band video data update request sent by the SIP terminal. When the MGW detects an in-band video data update request from the SIP terminal, the MGW notifies the MGCF, and the MGCF requests the H.324 terminal to send the video update data through H.245.

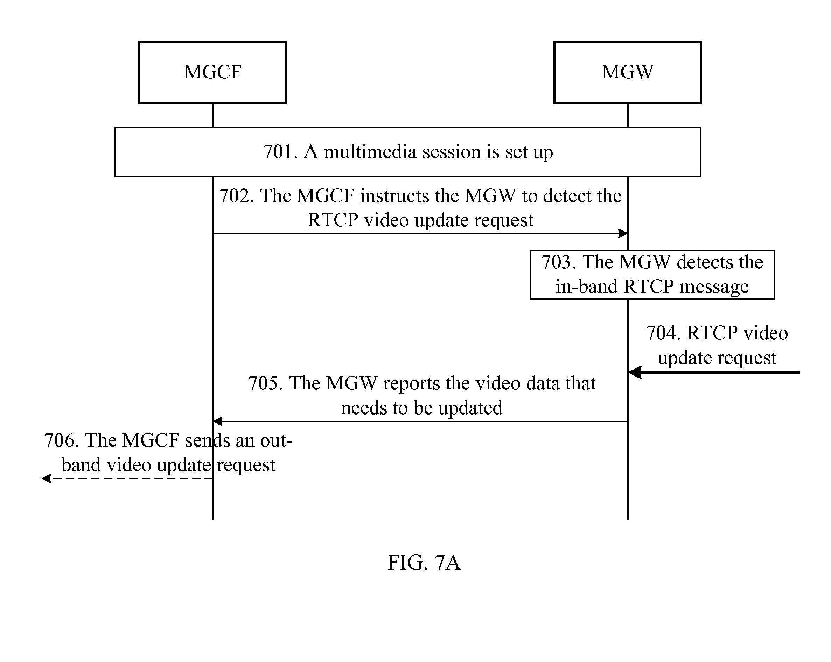

FIG. 7A is a flowchart for an MGW to detect in-band request messages in the second embodiment of the present invention. In this flowchart, the MGW detects the video data update request sent by the SIP terminal and reports the request to the MGCF in the scenario given in FIG. 6. The process includes the following steps:
Step 701: A multimedia session is set up.
Step 702: The MGCF decides the RTCP message type of the in-band video data update request of the SIP terminal that needs to be detected, and instructs the MGW to start detecting the RTCP message.
Steps 703-704: The MGW receives the RTCP message sent by the terminal and analyzes the message type, and checks whether the message type is the message type indicated by the MGCF for detection.
Step 705: If the MGW determines that the type of the received RTCP message is the message type indicated by the MGCF for detection, the MGW reports the video data update parameters carried in the RTCP message to the MGCF.
Step 706: The MGCF sends an out-band video data update request to the H.324 terminal through H.245 according to the video data update parameters reported by the MGW, requesting to update the video data indicated by the video data update parameters.

In the process shown in FIG. 7A, the video data update parameters reported by the MGW are the same as the video data update parameters carried in the in-band RTCP message sent by the SIP terminal.

This embodiment implements the foregoing process by extending the H.248 protocol. In this embodiment, an event for detecting the RTCP video quality feedback message (video update request detection event) is added to the H.248 protocol, instructing the MGW to detect and report the messages whose payload type is Payload-Specific Feedback Message (PSFB), for example, RTCP request or AVPF request.

The event delivered by the MGCF to the MGW for detecting RTCP video quality feedback messages carries event parameters, which instruct the MGW to detect and report the RTCP video quality feedback messages. The event parameters include at least one of the following parameters:
1. RTCP message type (Feedback Message Type (fmt)): adapted to determine the message type to be detected. The type value is determined by the standards related to the extended message of RTCP video quality feedback. The messages related to video data update requests include: Picture Loss Indication(PLI), Slice Loss Indication (SLI), and Full Intra Request (FIR).
2. nint: The parameter "nint" indicates the minimum interval between two attempts of reporting, and is set to prevent the MGW from reporting the events too frequently when the video quality stays at a low level due to poor network quality.

The foregoing event parameters decide the criteria and the reporting frequency for the MGW to detect and report the video data update requests. For example, the parameters of the video update request detection event are: fmt=FIR and nint=5s; when the MGW detects any RTCP message of the FIR type, the MGW reports the video update event and requests to update the video data; if the SIP terminal keeps sending the extended RTCP messages continuously for certain reasons in a period, the MGW needs to wait for 5s before reporting the next video update request detection event upon completion of one attempt of detecting and reporting the event.

The video update request detection event reported by the MGW to the MGCF based on the detection of an RTCP video quality feedback message carries the following video data update parameters, which indicate the video data that needs to be updated. The video data update parameters may include at least one of the following parameters:
firstMB: indicates the first MB identifier to be updated, where the MB identifier depends on the specific coding algorithm;
numberOfMBs: indicates the number of MBs that need to be updated; and
fastUpdatePicture: indicates that the entire video image needs to be updated, namely, the video source needs to send I-frame data.

The video data update parameters reported by the MGW are related to the detected message type. Different RTCP messages carry different video data update parameters. The video data update parameters reported by the MGW depend on the parameters carried in the RTCP message. The mapping relations between the message type detected by the MGW, the reported video data update parameters, and the H.245 signaling sent by the MGCF are as follows:

When the MGW detects the FIR message and the PLI message, the reported video data update parameter is fastUpdatePicture=1, and the H.245 signaling sent by the MGCF is videoFastUpdatePicture.

When the MGW detects an SLI message and the reported video data update parameters are firstMB and numberOfMBs, the parameter value of the firstMB is equal to the "first" parameter value in the SLI message, the parameter value of the numberOfMBs is equal to the "number" parameter value in the SLI message, and the H.245 signaling sent by the MGCF is videoFastupdateMB.

The foregoing video data update parameters reported by the MGW can implement the request for updating the local MB and the entire 1-frame data. For example, the reported parameters are firstMB=3 and numberOfMBs=5, indicating that it is necessary to update the video data of five MBs numbered 3-7; the reported parameter is fastUpdatePicture=1, indicating that it is necessary to update the entire frame and that the video source needs to send new 1-frame data.

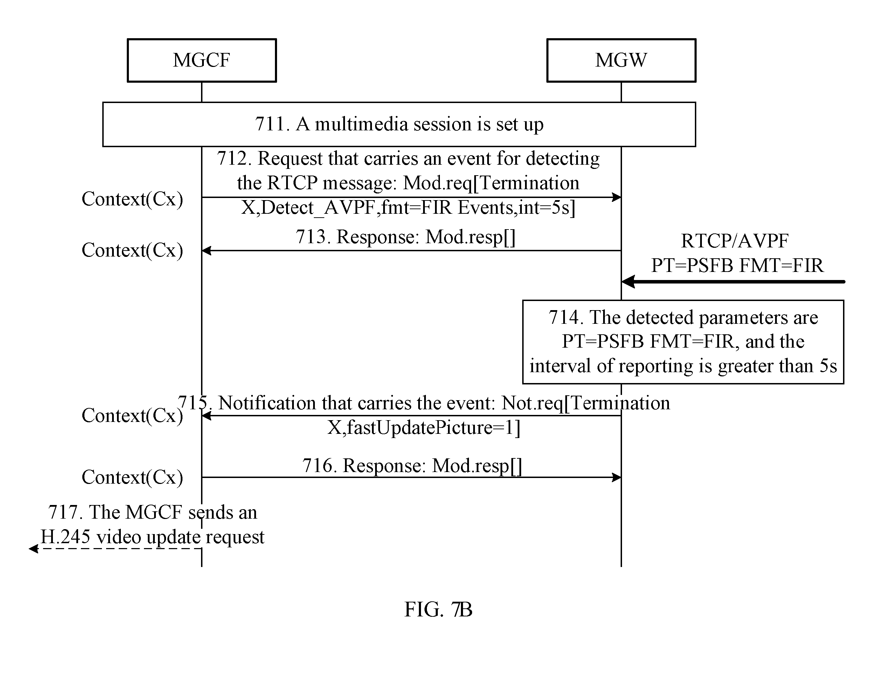

In the network architecture shown in FIG. 2, the MGW detects the in-band video data update request sent by the SIP terminal, and reports the detected in-band update request to the MGCF through an event. According to the received event, the MGCF sends an H.245 out-band video data update request to the H.324 terminal. The signaling flowchart is shown in FIG. 7B.

FIG. 7B is a signaling flowchart for an MGW to detect in-band request messages in the second embodiment of the present invention. The process includes the following steps:
Step 711: A multimedia session is set up.
Step 712: The MGCF sends a request to a specified termination (MGW) in the session. The request indicates the video update request detection event and the corresponding event parameters.

In this embodiment, the MGCF delivers the detection request to termination X corresponding to the SIP terminal. The video update request detection event delivered by the MGCF to the MGW instructs the MGW to detect the RTCP/AVPF requests, and detect only the RTCP messages whose payload type is PSFB. For example, the parameter of the video update request detection event is fmt=FIR, indicating that the MGW detects only the extended FIR messages. For other types of messages, RFC 4585 and raft-ietf-avt-avpf-ccm-05 serve as references.

Step 713: The MGW returns a response after receiving the request.

Steps 714-715: The MGW starts detecting the specified extended RTCP messages according to the video update request detection event indicated by the MGCF. When the MGW detects the FIR message of RTCP and the interval of sending the notification is greater than the interval specified by the MGCF, the MGW reports the video update request detection event through a notification. The notification carries the parameter "fastUpdatePicture=1", indicating the need of updating the entire frame.

The video data update parameter carried in the notification varies with the type of the detected RTCP message. In this embodiment, the FIR message of RTCP needs to be detected. Accordingly, the reported video data update parameter is fastUpdatePicture.

Step 716: The MGCF returns a response after receiving the notification.

Step 717: According to the video data update parameter (fastUpdatePicture=1) reported by the MGW, the MGCF sends an H.245 signaling message (such as videoFastUpdatePicture) to the H.324 terminal, requesting the H.324 terminal to update the entire frame.

### Third Embodiment

In this embodiment, the MGCF instructs the MGW to send the in-band video data update request, thus implementing the process of updating the video data. When the MGCF receives the relevant out-band request message, if the requested video source supports in-band requests, the MGCF sends an in-band request to the video source through the MGW

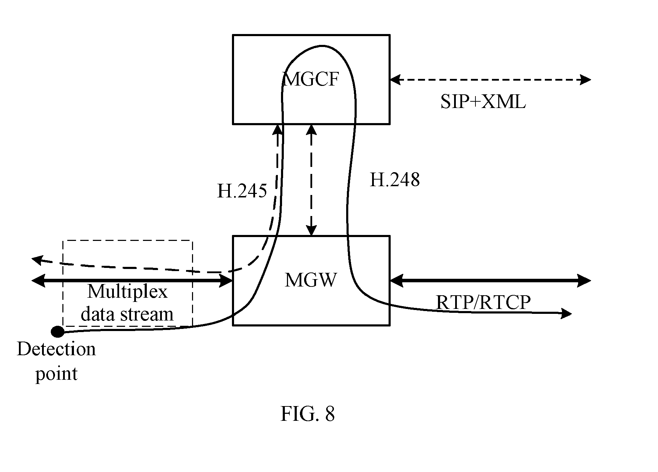

FIG. 8 shows an application scenario of this embodiment. In FIG. 8, the MGW detects the out-band video data update request sent by the H.324 terminal. When the MGW detects an out-band video data update request from the H.324 terminal, the MGW notifies the MGCF, and the MGCF requests the SIP terminal to send the video update data through in-band RTP/RTCP.

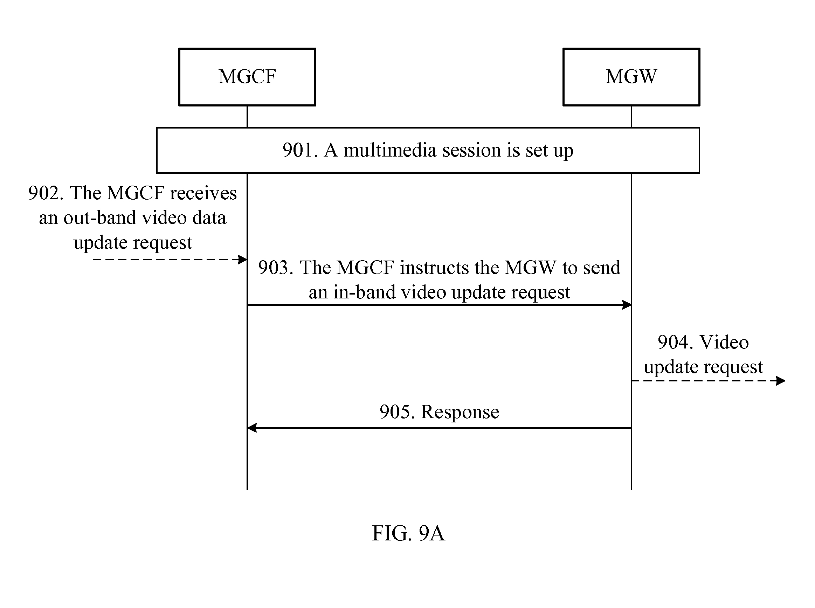

FIG. 9A is a flowchart for an MGCF to instruct an MGW to detect video data update requests in the third embodiment of the present invention. The process includes the following steps:
Step 901: A multimedia session is set up.
Step 902: The MGCF receives an out-band video data update request, which carries video data update parameters.
Step 903: If the video source supports the in-band request mode, the MGCF instructs the MGW to send an in-band request message to the video source. The video data update parameters carried in the in-band request message are the same as the video data update parameters in the video data update request received by the MGCF.
Step 904: According to the indication from the MGCF, the MGW sends an in-band update request to the video source. The video data indicated for updating in the video data update parameters carried in the request is the same as the video data indicated for updating in the video data update parameters sent by the MGCF.
Step 905: The MGW returns a response to the MGCF after sending the request.

In the process in FIG. 9A, the MGCF transmits the H.245 message parameters to the MGW directly, and the MGW is responsible for conversion between the parameters of the H.245 message and the parameters of the extended RTCP message, and sending a matched RTCP message according to the H.245 message.

This embodiment implements the foregoing process by extending the H.248 protocol. In this embodiment, a signal that instructs the MGW to send an extended message of RTCP video quality is added to the H.248 protocol. Through this signal, the MGCF may instruct the MGW to send the extended RTCP messages whose payload type is PSFB. The parameters of this signal are the same as those of the H.245 signaling, and include at least one of the following parameters:
1. firstGOB: indicates the first GOB identifier to be updated in the video image, where the GOB identifier depends on the specific coding algorithm;
2. numberOfGOBs: indicates the number of GOBs that need to be updated;
3. firstMB: indicates the first MB identifier to be updated, where the MB identifier depends on the specific coding algorithm;
4. numberOfMBs: indicates the number of MBs that need to be updated; and
5. fastUpdatePicture: indicates that the entire video image needs to be updated, namely, the video source needs to send 1-frame data.

The MGW sends the corresponding RTCP message according to the received signal parameters. The mapping relations are as follows:
If the signal parameters include fastUpdatePicture, the MGW sends an FIR message; otherwise, the MGW sends an SLI message. The "first" parameter value in the SLI message is calculated in this way: first = firstMB + firstGOB * number of MBs in each GOB.

The "number" parameter value in the SLI message is calculated in this way: number = numberOfGOBs * number of MBs in each GOB + numberOfMBs.

Through the conversion of the signal parameters, the conversion can be implemented between the out-band H.245 video update signaling and the in-band extended RTCP message. The foregoing conversion can be performed on the MGCF.

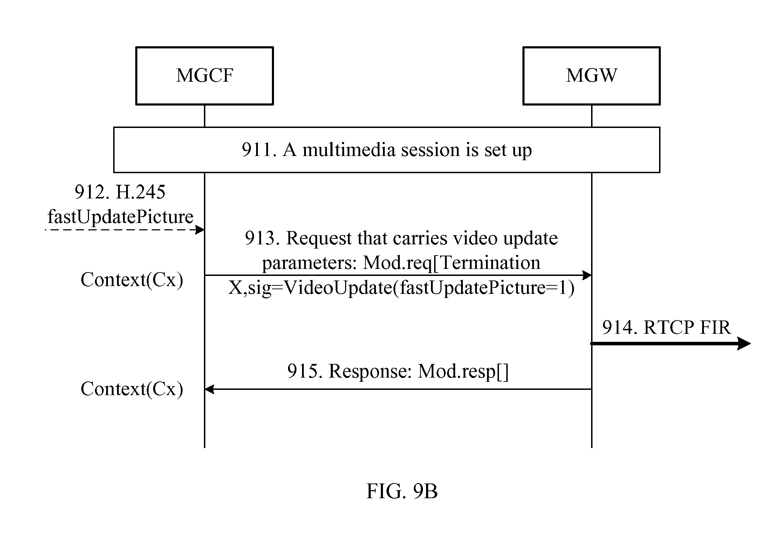

In the network architecture shown in FIG. 2, the MGCF receives the H.245 video data update request of the H.324 terminal, and instructs the MGW to send the corresponding in-band extended RTCP signaling to the SIP terminal, as shown in FIG. 9B.

FIG. 9B is a signaling flowchart for an MGCF to instruct an MGW to detect video data update requests in the third embodiment of the present invention. The process includes the following steps:
Step 911: A multimedia session is set up.
Steps 912-913: After receiving the out-band H.245 video data update request, the MGCF sends a request to the MGW. The request carries a signal that instructs the MGW to send an extended RTCP video quality message.

In this embodiment, the MGCF detects termination X corresponding to the H.324 terminal. The signal parameter in the request is fastUpdatePicture=1, which instructs the MGW to send a video data update request for updating the entire frame to the requested video source.

Step 914: After receiving the video data update request from the MGCF, the MGW converts the signal parameters into RTCP message parameters, and sends the corresponding extended RTCP message.

In this embodiment, the signal parameter received by the MGW is fastUpdatePicture=1. According to the aforementioned mapping relation between the signal parameters and the extended RTCP message, the MGW sends an FIR message of RTCP.

Step 915: The MGW sends a response to the MGCF.

Congruent with the processes in the first, second, and third embodiments, an MC, an MP, and a video data update system are provided.

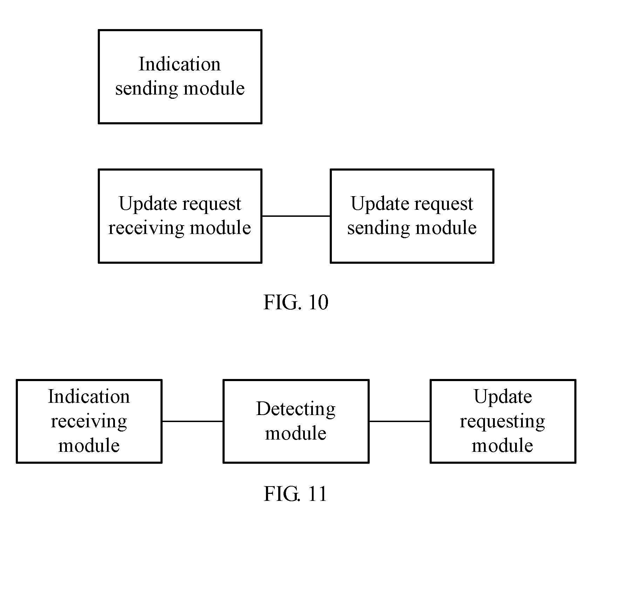

Congruent with the process in the first embodiment, an MC is provided. As shown in FIG. 10, the MC includes:
an indication sending module, adapted to send an indication to an MP; and
an update request receiving module, adapted to receive a request for obtaining video data to be updated, where the request is sent by the MP according to a detection result after the MP detects video quality of the video source according to the indication sent by the indication sending module.

The MC may further include an update request sending module, which is adapted to send an out-band video data update request according to the request received by the update request receiving module, and request the video source to update the video data that needs to be updated.

The indication sent by the indication sending module of the MC may be a video quality detection event that carries video quality detection parameters. The update request receiving module receives the video quality detection event reported by the MP, and requests the video data to be updated from the MC. The video quality detection event is reported by the MP according to a detection result after the MP detects the video quality of the video source according to the video quality detection parameters in the video quality detection event sent by the MC. The video quality detection event carries video data update parameters which indicate the video data to be updated.

Congruent with the process in the first embodiment, an MP is provided. As shown in FIG. 11, the MP includes:
an indication receiving module, adapted to receive an indication sent by an MC;
a detecting module, adapted to detect video quality of a video source according to the received indication; and
an update requesting module, adapted to request the video data to be updated from the MC according to a video quality detection result of the detecting module.

The indication received by the indication receiving module in the MP is a video quality detection event sent by the MC, and the video quality detection event carries video quality detection parameters. According to the video quality detection parameters, the detecting module detects the video quality of the video source. According to the video quality detection result of the detecting module, the update requesting module reports the video quality detection event to the MC. The video quality detection event carries the video data update parameters, which indicate the video data to be updated.

The video quality detection parameters include a video MB error rate. According to the video quality detection parameters, the detecting module detects the MB error rate of the video source. After the detecting module detects that the MB error rate of the video source is higher than the video MB error rate in the video quality detection parameters, the update requesting module reports a video quality detection event to the MC. The video MB error rate may include maxpoe and minpoe. If the detecting module detects that the video MB error rate of the video source falls between the maxpoe and the minpoe, the update requesting module sends a request for updating the local video data; if the detecting module detects that the video MB error rate of the video source is greater than the maxpoe, the update requesting module sends a request for updating the entire frame.

The video quality detection parameters further include a "nint" parameter. The update requesting module reports the video quality detection event at intervals indicated by the nint.

Congruent with the process in the first embodiment, a video data update system is provided. The system includes an MC and an MP applicable to the process in the first embodiment.

The MP is adapted to detect the video quality of the video source according to the indication from the MC, and request the video data to be updated from the MC according to a video quality detection result.

The MC is adapted to instruct the MP to detect the video quality of the video source.

The MC is further adapted to send a video data update request for updating the video data to the video source after receiving the MP's request for obtaining the video data to be updated.

Congruent with the process in the second embodiment, an MC is provided. As shown in FIG. 10, the MC includes:
an indication sending module, adapted to send an indication to an MP; and
an update request receiving module, adapted to receive a request for obtaining video data to be updated, where the request is sent by the MP after the MP detects an in-band video update request from the specified video source according to the received indication.

The MC may further include an update request sending module, which is adapted to send an out-band video data update request according to the request received by the update request receiving module, and send an out-band video data update request for updating the video data to the video source.

The indication sent by the indication sending module in the MC is a video update request detection event which is adapted to instruct the MP to detect the in-band video data update request sent by the video source. The video update request detection event carries event parameters, and the event parameters include the RTCP message type parameter. The update request receiving module receives the video update request detection event reported by the MP, and requests the video data to be updated from the MC. The video update request detection event is reported by the MP after the MP detects an in-band video data update request from the video source according to the video update request detection event sent by the MC. The video update request detection event carries video data update parameters which indicate the video data to be updated.

The video data update parameter is a parameter for updating the local video data or updating the entire frame. The type of the video data update parameter carried in the video update request detection event is decided by the MP according to the message type parameter.

Congruent with the process in the second embodiment, an MP is provided. As shown in FIG. 11, the MP includes:
an indication receiving module, adapted to receive an indication sent by an MC;
a detecting module, adapted to detect an in-band video data update request sent by the video source specified by the indication received by the indication receiving module according to the indication; and
an update requesting module, adapted to request the video data to be updated from the MC after the detecting module detects the in-band video data update request.

The indication received by the indication receiving module in the MP is a video update request detection event sent by the MC. The video update request detection event carries event parameters which include an RTCP message type parameter. The message type indicated by the RTCP message type parameter is an SLI message, a PLI message or an intra-frame update request message. The event parameters further include a nint parameter. The detecting module detects the in-band video data update request according to the RTCP message type parameter. The update requesting module reports the video update request detection event to the MC after the detecting module detects an in-band video data update request. The video update request detection event carries video data update parameters which indicate the video data to be updated. If the event parameters further include a nint parameter, the update requesting module reports the video update request detection event at the intervals indicated by the nint parameter.

The update requesting module in the MP includes:
a first update requesting sub-module, adapted to request to update local video data according to an SLI message; and
a second update requesting sub-module, adapted to request to update the entire frame according to a PLI message or an intra-frame update request message.

Congruent with the process in the second embodiment, a video data update system is provided. The system includes an MC and an MP applicable to the process in the second embodiment.

The MP is adapted to detect an in-band video data update request of a video source according to the indication from the MC, and send a request for obtaining the video data to be updated to the MC after detecting the in-band video data update request.

The MC is adapted to instruct the MP to detect the in-band video update request sent by the video source, and receive the request for obtaining the video data to be updated from the MP.

The MC is further adapted to send a video data update request for updating the video data to the video source requested in the in-band video update request after receiving the MP's request for obtaining the video data to be updated.

Congruent with the process in the third embodiment, an MC is provided. The MC includes:
an update request receiving module, adapted to receive an out-band video data update request sent by a video source; and
an indication sending module, adapted to send an indication to the MP, where the indication instructs the MP to send an in-band video data update request for updating the video data indicated by the received out-band video data update request.

The indication sending module in the MC sends the indication to the MP after the update request receiving module receives the out-band video data update request.

Congruent with the process in the third embodiment, an MP is provided. The MP includes:
an indication receiving module, adapted to receive an indication sent by an MC; and
an update requesting module, adapted to send an in-band video data update request to a video source according to the indication, requesting to update the video data specified by the indication.

The indication received by the indication receiving module in the MP carries video data update parameters for updating the entire frame or updating local video data. The update requesting module in the MP further includes:
a first update requesting sub-module, adapted to send an in-band video data update request for updating the entire frame according to the parameter for updating the entire frame; and
a second update requesting sub-module, adapted to convert the video data update parameter into the parameter of the corresponding out-band video data update request according to the parameter for updating the local video data, and send the in-band video data update request for updating the local video data.

Congruent with the process in the third embodiment, a video data update system is provided. The system includes an MC and an MP applicable to the process in the third embodiment.

The MP is adapted to send an in-band video data update request to the requested video source according to the indication from the MC, requesting to update the video data.

The MC is adapted to send an indication to the MP after receiving an out-band video data update request from the video source, instructing the MP to send an in-band video data update request to the requested video source in the out-band video update data update request.

After reading the foregoing embodiments, those skilled in the art are clearly aware that the embodiments of the present invention may be implemented through hardware, or through software in addition to a necessary universal hardware platform, but the latter is preferred in most circumstances. Therefore, the technical solution of the present invention or the contributions to the prior art may be embodied as a software product. The software product may be stored in a computer-readable storage medium (such as a floppy disk, a hard disk and a compact disk) and incorporate several instructions for instructing a computer device (for example, a personal computer, a server, or a network device) to execute the method specified in each embodiment of the present invention.

In the embodiments of the present invention, when the IM-MGW detects a video quality problem of the H.324 terminal or SIP terminal, the IM-MGW may request the video data to be updated from the MGCF according to the indication from the MGCF; if the SIP terminal returns a video update request through in-band RTP/RTCP but the IM-MGW is unable to provide the requested update data, the IM-MGW may report the update request to the MGCF through the H.248 protocol according to the indication from the MGCF so that the MGCF can request the H.324 terminal to update the video data through an H.245 message. If the MGCF receives an H.245 video data update request from the H.324 terminal but the SIP terminal does not support the video data update request of the SIP+XML format, the MGCF may instruct the IM-MGW to send an in-band video data update request. In conclusion, in the embodiments of the present invention, the MGCF instructs the MGW to implement the request for updating the video data in the foregoing scenarios.

It is apparent that those skilled in the art can make various changes and modifications to the present invention without departing from the spirit and scope of the present invention. The present invention is intended to cover such changes and modifications provided that they fall in the scope of protection defined by the following claims or their equivalents.

## Claims

1. A method for updating video data, comprising:
by a Media Processor (MP), receiving an indication sent by a Media Controller (MC), wherein the indication instructs the MP to detect video quality of a video source; and
detecting the video quality of the video source and requesting video data to be updated from the MC according to a detection result.

2. The method of claim 1, wherein receiving, by an MP, an indication sent by an MC comprises:
receiving, by the MP, a video quality detection event sent by the MC; and
detecting, by the MP, the video quality of the video source and requesting the video data to be updated from the MC according to the detection result comprises:
detecting, by the MP, the video quality of the video source according to the video quality detection event, reporting the video quality detection event according to the detection result, and requesting the video data to be updated from the MC.

3. The method of claim 2, wherein:
the video quality detection event received by the MP from the MC carries video quality detection parameters; and
detecting, by the MP, detects the video quality of the video source according to the video quality detection event and reportsing the video quality detection event according to the detection result in the following way:
the MP detecting, by the MP,s the video quality of the video source according to the video quality detection parameters, and reportsing the event according to the detection result, wherein the event carries video data update parameters which indicate the video data to be updated.

4. The method of claim 3, wherein:
the video quality detection parameters comprise a video Macro Block (MB) error rate; and
detecting, by the MP, detects the video quality of the video source according to the video quality detection parameters and reportsing the event according to the detection result comprisesin the following way:
detecting, by the MP, the video MB error rate of the video source is higher than the video MB error rate in the video quality detection parameters, and the MP reportings the video quality detection event to the MC after detecting that the video MB error rate of the video source is higher than the video MB error rate in the video quality detection parameters.

5. The method of claim 4, wherein:
the video MB error rate in the video quality detection parameters comprises Min Percent of Error (minpoe) and Max Percent of Error (maxpoe); and
detecting, by the MP, the video MB error rate of the video source is higher than the video MB error rate in the video quality detection parameters, and the MP reportsing the video quality detection event to the MC comprises after detecting that the video MB error rate of the video source is higher than the video MB error rate in the video quality detection parameters in the following way:
the MP requests the MC to update local video data if the MP detectsing, by the MP, that the MB error rate of the video source is lower than the maxpoe but higher than the minpoe, and requesting the MC to update local video data; or
the MP requests the MC to update an entire frame if the MP detectsing, by the MP, that the MB error rate of the video source is higher than the maxpoe, and requesting the MC to update an entire frame.

6. The method of claim 4, wherein:
the video quality detection parameters further comprise a notify interval (nint) parameter; and
the MP detectsing, by the MP, the video quality of the video source according to the video quality detection parameters and reportsing the event according to the detection result in the following waycomprises:
the MP reportsing, by the MP, the event at intervals indicated by the nint.

7. The method of claim 1, wherein after the MC receives a video data update request, the method further comprises:
sending an out-band video data update request to the video source, and requesting the video source to update the video data that needs to be updated.

8. A method for updating video data, comprising:
receiving, by a Media Processor (MP), an indication sent by a Media Controller (MC) and performing detection; and requesting video data to be updated from the MC if the MP detects an in-band video data update request sent by a video source, wherein the indication instructs the MP to detect the in-band video data update request sent by the video source.

9. The method of claim 8, wherein: receiving, by the MP, the indication sent by the MC comprises:
receiving, by the MP, a video update request detection event sent by the MC; and
performing the detection, and requesting the video data to be updated from the MC if the MP detects the in-band video data update request sent by the video source comprises:
detecting, by the MP, the in-band video data update request according to the event, and requests the video data to be updated from the MC if the MP detects the in-band video data update request sent by the video source.

10. The method of claim 9, wherein:
the video update request detection event received by the MP from the MC carries event parameters, and the event parameters comprise a Real-time Transport Control Protocol (RTCP) message type parameter; and
reporting the event if the MP detects the in-band video data update request sent by the video source and requesting the video data to be updated from the MC comprise:
reporting, by the MP, the video update request detection event to the MC according to the type of the message indicated by the message type parameter if the MP detects the message, wherein the video update request detection event carries video data update parameters that indicate to update the local video data or the entire frame.

11. The method of claim 10, wherein:
the video update request detection event that carries the video data update parameters is reported to the MC according to the type of the message in the following way:
if the message is a Slice Loss Indication (SLI) message, the video update request detection event that carries the video data update parameters is reported to the MC, wherein the video data update parameters indicate the local video data that needs to be updated; or
if the message is a Picture Loss Indication (PLI) message or an intra-frame update request message, the video update request detection event that carries the video data update parameters is reported to the MC, wherein the video data update parameters indicate the entire frame that needs to be updated.

12. The method of claim 10, wherein:
the event parameters further comprise a notify interval (nint) parameter; and
reporting, by the MP, the event if the MP detects the in-band video data update request sent by the video source comprises: reporting, by the MP,.the event at intervals indicated by the nint parameter.

13. The method of claim 8, wherein after the MC receives a video data update request, the method further comprises:
sending the video data update request to the requested video source, requesting the video source to update the video data that needs to be updated.

14. A method for updating video data, comprising:
receiving, by a Media Processor (MP), an indication sent by a Media Controller (MC), and sending an in-band video data update request to a video source specified by the indication according to the indication, wherein the indication sent by the MC to the MP instructs the MP to send the in-band video data update request for updating specified video data to the video source.

15. The method of claim 14, wherein:
the indication is sent by the MC to the MP in the following way: the indication is sent by the MC to the MP if the MC receives an out-band video data update request.

16. The method of claim 14, wherein:
the indication sent by the MC to the MP instructs the MP to send the in-band video data update request for updating the specified video data to the video source in the following way: the MC sends a request to the MP, instructing the MP to send the in-band video data update request to the video source, wherein the request carries a video data update parameter, and the video data update parameter is a parameter for updating an entire frame or updating local video data; and
sending, by the MP, the in-band video data update request to the video source indicated by the indication according to the indication sent by the MC comprises: sending, by the MP, the in-band video data update request of a corresponding type according to the video data update parameter carried in the request.

17. The method of claim 16, wherein the sending of the in-band video data update request of the corresponding type by the MP according to the video data update parameter carried in the request comprises:
sending, by the MP, the in-band video data update request for updating the entire frame according to the parameter for updating the entire frame; or
converting the video data update parameter into a parameter of a corresponding out-band video data update request according to the parameter for updating the local video data, and sending the in-band video data update request for updating the local video data.

18. The method of claim 14, wherein:
the in-band video data update request is a video data update request of an extended Real-time Transport Control Protocol (RTCP).

19. A Media Controller (MC), comprising:
an indication sending module, adapted to send an indication to a Media Processor (MP); and
an update request receiving module, adapted to receive a request for obtaining video data to be updated, wherein the request is sent by the MP according to a detection result afterif the MP detects video quality of a video source according to the indication sent by the indication sending module.

20. The MC of claim 19, wherein:
the indication sending module is adapted to send a video quality detection event; and
the update request receiving module is adapted to: receive the video quality detection event reported by the MP, and request the video data to be updated from the MC, wherein the reported video quality detection event is reported by the MP according to the detection result afterif the MP detects the video quality of the video source according to the video quality detection event sent by the MC.

21. The MC of claim 20, wherein:
the video quality detection event sent by the indication sending module carries video quality detection parameters; and the MP detects the video quality of the video source according to the video quality detection parameters; and
the video quality detection event received by the update request receiving module carries a video data update parameter which indicates the video data that needs to be updated.

22. The MC of claim 19, further comprising:
an update request sending module, adapted to: send an out-band video data update request according to the request received by the update request receiving module, and request the video source to update the video data that needs to be updated.

23. A Media Controller (MC), comprising:
an indication sending module, adapted to send an indication to a Media Processor (MP);
an update request receiving module, adapted to receive a request for obtaining video data to be updated, wherein the request is sent by the MP afterif the MP detects an in-band video update request from a specified video source according to the indication sent by the indication sending module.

24. The MC of claim 23, wherein:
the indication sending module is adapted to send a video update request detection event which instructs the MP to detect the in-band video data update request sent by the video source; and
the update request receiving module is adapted to: receive the video update request detection event reported by the MP, and request the video data to be updated from the MC, wherein the reported video update request detection event is reported by the MP afterif the MP detects the in-band video data update request sent by the video source according to the video update request detection event sent by the MC.

25. The MC of claim 24, wherein:
the video quality detection event sent by the indication sending module carries event parameters, and the event parameters comprise a Real-time Transport Control Protocol (RTCP) message type parameter; and
the video update request detection event received by the update request receiving module carries a video data update parameter which indicates the video data that needs to be updated; and the video data update parameter is a parameter for updating local video data or a parameter for updating an entire frame, and is determined by the MP according to the message type parameter.

26. The MC of claim 23, further comprising:
an update request sending module, adapted to: send an out-band video data update request according to the request received by the update request receiving module, and request the video source to update the video data that needs to be updated.

27. A Media Controller (MC), comprising:
an update request receiving module, adapted to receive an out-band video data update request sent by a video source; and
an indication sending module, adapted to send an indication to a Media Processor (MP), wherein: the indication instructs the MP to send an in-band video data update request for obtaining video data to be updated, and the video data requested by the in-band video data update request for updating is the video data indicated by the out-band video data update request for updating.

28. The MC of claim 27, wherein:
the indication sending module sends the indication to the MP afterif the update request receiving module receives the out-band video data update request.

29. A Media Processor (MP), comprising:
an indication receiving module, adapted to receive an indication sent by a Media Controller (MC);
a detecting module, adapted to detect video quality of a video source according to the indication; and
an update requesting module, adapted to request video data to be updated from the MC according to a video quality detection result of the detecting module.

30. The MP of claim 29, wherein:
the indication received by the indication receiving module is a video quality detection event that carries video quality detection parameters;
the detecting module is adapted to detect the video quality of the video source according to the video quality detection parameters; and
the update requesting module is adapted to report the video quality detection event to the MC according to the video quality detection result of the detecting module, wherein the video quality detection event carries video data update parameters that indicate the video data to be updated.

31. The MP of claim 30, wherein:
the video quality detection parameters comprise a video Macro Block (MB) error rate;
the detecting module is adapted to detect the MB error rate of the video source; and
the update requesting module is adapted to report the video quality detection event to the MC afterif the detecting module detects that the MB error rate of the video source is higher than the video MB error rate in the video quality detection parameters.

32. The MP of claim 30, wherein:
the video quality detection parameters further comprise a notify interval (nint) parameter; and
the update requesting module is adapted to report the video quality detection event at intervals indicated by the nint parameter.

33. A Media Processor (MP), comprising:
an indication receiving module, adapted to receive an indication sent by a Media Controller (MC);
a detecting module, adapted to detect an in-band video data update request sent by a video source specified by the indication according to the indication; and
an update requesting module, adapted to request video data to be updated from the MC afterif the detecting module detects the in-band video data update request.

34. The MP of claim 33, wherein:
the indication received by the indication receiving module is a video update request detection event sent by the MC; the event carries event parameters; and the event parameters comprise a Real-time Transport Control Protocol (RTCP) message type parameter;
the detecting module is adapted to detect the in-band video data update request according to the RTCP message type parameter; and
the update requesting module is adapted to report the video update request detection event to the MC afterif the detecting module detects the in-band video data update request, wherein the video update request detection event carries video data update parameters that indicate the video data to be updated.

35. The MP of claim 34, wherein:
the message type indicated by the RTCP message type parameter is a Slice Loss Indication (SLI) message, or a Picture Loss Indication (PLI) message, or an intra-frame update request message;
the update requesting module comprises:
a first update requesting sub-module, adapted to request to update local video data according to the SLI message; and
a second update requesting sub-module, adapted to request to update an entire frame according to the PLI message or the intra-frame update request message.

36. The MP of claim 34, wherein:
the event parameters further comprise a notify interval (nint) parameter; and
the update requesting module is adapted to report the video update request detection event at intervals indicated by the nint parameter.

37. A Media Processor (MP), comprising:
an indication receiving module, adapted to receive an indication sent by a Media Controller (MC);
an update requesting module, adapted to send an in-band video data update request to a video source according to the indication, requesting to update video data specified by the indication.

38. The MP of claim 37, wherein:
the indication carries a video data update parameter which is a parameter for updating an entire frame or updating local video data;
the update requesting module comprises:
a first update requesting sub-module, adapted to send an in-band video data update request for updating the entire frame according to the parameter for updating the entire frame; and
a second update requesting sub-module, adapted to convert the video data update parameter into a parameter of a corresponding out-band video data update request according to the parameter for updating the local video data, and send the in-band video data update request for updating the local video data.

39. A system for updating video data, comprising a Media Controller (MC) and a Media Processor (MP), wherein:
the MP is adapted to detect video quality of a video source according to an indication from the MC, and send a request for obtaining video data to be updated to the MC according to a video quality detection result; and
the MC is adapted to instruct the MP to detect the video quality of the video source.

40. The system of claim 39, wherein:
the MC is further adapted to send a video data update request for updating the video data that needs to be updated to the video source after receiving the request sent by the MP.

41. A system for updating video data, comprising a Media Controller (MC) and a Media Processor (MP), wherein:
the MP is adapted to detect an in-band video data update request of a video source according to an indication from the MC, and send a request for obtaining video data to be updated to the MC after detecting the in-band video data update request; and
the MC is adapted to instruct the MP to detect the in-band video update request sent by the video source.

42. The system of claim 41, wherein:
the MC is further adapted to send a video data update request for updating the video data that needs to be updated to the video source requested in the in-band video update request if receiving the request sent by the MP.

43. A system for updating video data, comprising a Media Controller (MC) and a Media Processor (MP), wherein:
the MP is adapted to send an in-band video data update request to a requested video source according to an indication from the MC, requesting to update video data; and
the MC is adapted to send the indication to the MP if receiving an out-band video data update request from the video source, instructing the MP to send the in-band video data update request to the requested video source in the out-band video update data update request.
